# EUROPÄISCHE PATENTSCHRIFT

(11) **EP 4 717 026 B1**
(45) Veröffentlichungstag und Bekanntmachung des Hinweises auf die Patenterteilung: **02.12.2026**
(21) Anmeldenummer: 24715731.6
(22) Anmeldetag: 22.03.2024
(51) Int. Cl.: H04L 67/12, G07C 5/00, G07C 5/08, H04L 9/40, H04L 67/125, H04W 4/44

(54) **VERFAHREN ZUM BETREIBEN EINES REMOTE-DIAGNOSE-SYSTEMS EINES FAHRZEUGS, COMPUTERLESBARES MEDIUM, SYSTEM, UND FAHRZEUG**
METHOD FOR OPERATING A REMOTE DIAGNOSIS SYSTEM OF A VEHICLE, COMPUTER-READABLE MEDIUM, SYSTEM, AND VEHICLE
PROCÉDÉ DE FONCTIONNEMENT D'UN SYSTÈME DE TÉLÉDIAGNOSTIC D'UN VÉHICULE, SUPPORT LISIBLE PAR ORDINATEUR, SYSTÈME ET VÉHICULE

(30) Priorität: 22.05.2023 DE 102023113314
(43) Veröffentlichungstag der Anmeldung: 01.04.2026
(73) Patentinhaber: Bayerische Motoren Werke Aktiengesellschaft, 80809 München (DE)
(72) Erfinder: REITHMEIER, Michael, 82223 Eichenau (DE); WINKLHOFER, Peter, 80995 Muenchen (DE)
(86) Internationale Anmeldenummer: PCT/EP2024/057754
(87) Internationale Veröffentlichungsnummer: WO 2024/240396

(56) Entgegenhaltungen:
- US-A1- 2017 236 343
- US-A1- 2017 310 674

## Beschreibung

Die Erfindung betrifft ein Verfahren zum Betreiben eines Remote-Diagnose-Systems eines Fahrzeugs. Die Erfindung betrifft ferner ein computerlesbares Medium zum Betreiben eines Remote-Diagnose-Systems eines Fahrzeugs, ein System zum Betreiben eines Remote-Diagnose-Systems eines Fahrzeugs, sowie ein Fahrzeug umfassend das System zum Betreiben eines Remote-Diagnose-Systems eines Fahrzeugs.

Aus dem Stand der Technik bekannt sind Fahrzeuge, auf die ein Fahrzeughersteller mittels Remote-Diagnose zugreifen kann. Dazu muss ein Nutzer des Fahrzeugs explizit einen Zugriff durch den Fahrzeughersteller über eine Bedienschnittstelle des Fahrzeugs erlauben. Alternativ kann ein Nutzer bei einem Pannenruf über ein in das Fahrzeug integrierte Notrufsystem einen Zugriff durch den Fahrzeughersteller mittels Remote-Diagnose auf das Fahrzeug aktivieren. Der Zugriff mittels Remote-Diagnose ist dabei auf den Fahrzeughersteller beschränkt. Für einen Nutzer eines Fahrzeugs ist es nicht möglich, eine Berechtigung für eine Remote-Diagnose an einen Dritten und/oder an den Hersteller des Fahrzeugs zu steuern.

Die US Patentanmeldung US2017/236343 ist weiterer Stand der Technik.

Es ist daher eine Aufgabe der Erfindung, ein Remote-Diagnose-System eines Fahrzeugs sicherer zu betreiben. Insbesondere ist eine Aufgabe der Erfindung, ein Remote-Diagnose-System eines Fahrzeugs flexibler und sicherer zu betreiben.

Gelöst wird diese Aufgabe durch die Merkmale der unabhängigen Ansprüche. Vorteilhafte Ausgestaltungen und Weiterbildungen der Erfindung ergeben sich aus den abhängigen Ansprüchen.

Gemäß einem ersten Aspekt zeichnet sich die Erfindung aus durch ein Verfahren zum Betreiben eines Remote-Diagnose-Systems eines Fahrzeugs. Das Verfahren kann ein computerimplementiertes Verfahren und/oder ein steuergeräteimplementiertes Verfahren sein. Das Remote-Diagnose-System des Fahrzeugs kann ein verteiltes Remote-Diagnose-System des Fahrzeugs sein. Beispielsweise kann das Remote-Diagnose-System ein mobiles Endgerät eines Nutzers eines Fahrzeugs, einen Remote-Diagnose-Server, einen Backend-Server eines Fahrzeugherstellers, und/oder ein oder mehrere Steuergeräte des Fahrzeugs umfassen. Das Fahrzeug kann ein Kraftfahrzeug, beispielsweise ein Personenkraftwagen oder ein Motorrad, sein.

Das Verfahren umfasst ein Ermitteln eines Remote-Diagnose-Berechtigungsobjekts für einen Remote-Diagnose-Server durch ein mobiles Endgerät mit einem digitalen Fahrzeugschlüssel, insbesondere durch ein mobiles Endgerät, auf dem der digitale Fahrzeugschlüssel gespeichert ist. Das Ermitteln des Remote-Diagnose Berechtigungsobjekts kann ein Erzeugen des Remote-Diagnose-Berechtigungsobjekts für den Remote-Diagnose-Server durch das mobile Endgerät umfassen. Das mobile Endgerät kann ein Smartphone, eine Smartwatch, und/oder ein anderes smartes Gerät, mit einem digitalen Fahrzeugschlüssel sein. Vorzugsweise ist der digitale Fahrzeugschlüssel auf dem mobilen Endgerät gespeichert. Weiter vorzugsweise ist der digitale Fahrzeugschlüssel auf einem sicheren Element, engl. secure element, des mobilen Endgeräts gespeichert. Der digitale Fahrzeugschlüssel kann ein standarisierter, digitaler Fahrzeugschlüssel sein. Der digitale Fahrzeugschlüssel kann nach einem Standard des Connected Car Consortiums standardisiert sein. Beispielsweise kann der digitale Fahrzeugschlüssel ein digitaler Fahrzeugschlüssel nach der Digital Key Release 3.x Spezifikation des Connected Car Consortiums sein.

Das Verfahren umfasst ein Signieren des Remote-Diagnose-Berechtigungsobjekts mit einem privaten, kryptografischen Schlüssel des digitalen Fahrzeugschlüssels durch das mobile Endgerät und ein Übermitteln des signierten Remote-Diagnose-Berechtigungsobjekts von dem mobilen Endgerät an einen Backend-Server eines Fahrzeugherstellers und/oder an ein erstes Steuergerät des Fahrzeugs. Weiter kann das Verfahren ein Überprüfen einer Signatur des signierten Remote-Diagnose-Berechtigungsobjekts mit einem öffentlichen, kryptografischen Schlüssel des digitalen Fahrzeugschlüssels auf dem Backend-Server des Fahrzeugherstellers und/oder auf dem ersten Steuergerät des Fahrzeugs umfassen. Falls die Signatur des signierten Remote-Diagnose-Berechtigungsobjekts mit dem öffentlichen, kryptografischen Schlüssel des digitalen Fahrzeugschlüssels auf dem Backend-Server des Fahrzeugherstellers und/oder auf dem ersten Steuergerät des Fahrzeugs erfolgreich überprüft wurde, führt das Verfahren einen Remote-Diagnose-Befehl auf dem ersten Steuergerät des Fahrzeugs und/oder einem oder mehreren, weiteren Steuergeräten des Fahrzeugs in Abhängigkeit des signierten Remote-Diagnose-Berechtigungsobjekts aus.

Vorteilhafterweise kann durch das Signieren des Remote-Diagnose-Berechtigungsobjekts die Sicherheit einer Remote-Diagnose effizient verbessert werden. Der Nutzer des Fahrzeugs kann einen Remote-Diagnose-Zugriff durch ein Signieren des Remote-Diagnose-Objekt flexibel und/oder präziser autorisieren. Somit hat der Nutzer des Fahrzeugs mit dem digitalen Fahrzeugschlüssel eine flexible Kontrollmöglichkeit über Remote-Diagnose-Zugriffe auf das Fahrzeug. Über eine Remote-Diagnose können beispielsweise Fahrzeugfunktionen wie ein Entsperren einer Fahrzeugtüre geschützt ausgeführt werden. Durch die flexible Kontrollmöglichkeit mit dem mobilen Endgerät hat der Nutzer stets die Möglichkeit einen unberechtigten Zugriff mittels Remote-Diagnose zu verhindern, indem der Nutzer ein Signieren des Remote-Diagnose-Berechtigungsobjekts ablehnt und/oder eine Berechtigung für die Remote-Diagnose nicht erteilt. Weiter kann der Nutzer flexibel Dritte, beispielsweise einer Fahrzeugwerkstatt einen Remote-Diagnose-Zugriff ermöglichen, damit ein möglicher Fehler und/oder ein möglicher Defekt des Fahrzeugs durch den Dritten identifiziert und/oder behoben werden können. Der Nutzer hat somit mit dem digitalen Fahrzeugschlüssel des mobilen Endgeräts eine einfache Möglichkeit, sicher und flexibel eine Remote-Diagnose-Zugriff durch einen Dritten und/oder einen Fahrzeughersteller zu steuern.

Gemäß einer vorteilhaften Ausgestaltung kann das Remote-Diagnose-Berechtigungsobjekt ein Berechtigungsobjekt für ein Lesen von Diagnosedaten des ersten Steuergeräts und/oder eines oder mehrerer, weiterer Steuergeräte des Fahrzeugs als Remote-Diagnose-Befehl umfassen. Hiermit können mehrere Remote-Diagnose-Befehle für eine Vielzahl von Steuergeräten des Fahrzeugs effizient mit dem Remote-Diagnose-Objekt ausgeführt werden.

Gemäß einer weiteren, vorteilhaften Ausgestaltung kann das Remote-Diagnose-Berechtigungsobjekt ein Berechtigungsobjekt für ein Steuern einer Remote-Diagnose-Funktion des ersten Steuergeräts und/oder eines oder mehrerer, weiterer Steuergeräte des Fahrzeugs als Remote-Diagnose-Befehl umfassen. Hiermit können mehrere Remote-Diagnose-Funktionen auf einer Vielzahl von Steuergeräten des Fahrzeugs effizient mit dem Remote-Diagnose-Objekt ausgeführt werden.

Gemäß einer weiteren, vorteilhaften Ausgestaltung kann der private, kryptografische Schlüssel des digitalen Fahrzeugschlüssels in einem sicheren Schlüsselspeicher, engl. Secure Element, des mobilen Endgeräts gespeichert sein. Hiermit kann die Sicherheit des Signierens des Remote-Diagnose-Objekts effizient verbessert werden.

Gemäß einer weiteren, vorteilhaften Ausgestaltung kann das Übermitteln des signierten Remote-Diagnose-Berechtigungsobjekts von dem mobilen Endgerät an den Backend-Server des Fahrzeugherstellers und/oder an das erste Steuergerät des Fahrzeugs ein Übermitteln des signierten Remote-Diagnose-Berechtigungsobjekts von dem mobilen Endgerät an den Remote-Diagnose-Server, und ein Übermitteln des signierten Remote-Diagnose-Berechtigungsobjekts von dem Remote-Diagnose-Server an den Backend-Server des Fahrzeugherstellers oder an das erste Steuergerät des Fahrzeugs umfassen. Indem die Übermittelung des Remote-Diagnose-Berechtigungsobjekt über den Backend-Server des Fahrzeugherstellers an das erste Steuergerät des Fahrzeugs übermittelt wird, kann der Fahrzeughersteller einen Remote-Diagnose-Zugriff mit dem Remote-Diagnose-Berechtigungsobjekts überprüfen und/oder einen Nachweis über Remote-Diagnose-Zugriffe auf das Fahrzeug führen. Die Sicherheit des Remote-Diagnose-Systems kann hiermit effizient verbessert werden.

Gemäß einer vorteilhaften Ausgestaltung kann der Remote-Diagnose-Server ein Remote-Diagnose-Server des Fahrzeugherstellers oder ein Remote-Diagnose-Server eines Dritten sein. Hiermit kann das Verfahren flexibel an verschiedenen Remote-Diagnose-Dienstleister und deren Remote-Diagnose-Server angepasst werden. Das Verfahren kann mit verschiedenen Remote-Diagnose-Dienstleister und deren Remote-Diagnose-Server ausgeführt werden.

Gemäß einer weiteren, vorteilhaften Ausgestaltung kann das Übermitteln des signierten Remote-Diagnose-Berechtigungsobjekts von dem Remote-Diagnose-Server an den Backend-Server des Fahrzeugherstellers ein Übermitteln des signierten Remote-Diagnose-Berechtigungsobjekts vom dem Remote-Diagnose-Server an den Backend-Server des Fahrzeugherstellers, ein Überprüfen der Signatur des signierten Remote-Diagnose-Berechtigungsobjekts mit einem öffentlichen, kryptografischen Schlüssel des digitalen Fahrzeugschlüssels auf dem Backend-Server des Fahrzeugherstellers, und ein Übermitteln des signierten Remote-Diagnose-Berechtigungsobjekts von dem Backend-Server des Fahrzeugherstellers an das erste Steuergerät des Fahrzeugs umfassen, falls die Signatur des signierten Remote-Diagnose-Berechtigungsobjekts mit dem öffentlichen, kryptografischen Schlüssel des digitalen Fahrzeugschlüssels auf dem Backend-Server des Fahrzeugherstellers erfolgreich überprüft wurde. Das Überprüfen durch den Backend-Server kann zusätzlich zu einem Überprüfen der Signatur auf dem ersten Steuergerät des Fahrzeugs oder alternativ zum Überprüfen der Signatur auf dem ersten Steuergerät des Fahrzeugs erfolgen. Hiermit kann der Backend-Server des Fahrzeugherstellers die Signatur des Remote-Diagnose-Berechtigungsobjekts überprüfen und die Sicherheit des Remote-Diagnose-Systems effizient verbessern.

Gemäß einer weiteren, vorteilhaften Ausgestaltung kann das Verfahren weiterhin ein Übermitteln einer Fehlernachricht von einem Steuergerät des Fahrzeug an den Backend-Server des Fahrzeugherstellers, ein Übermitteln der Fehlernachricht von dem Backend-Server des Fahrzeugherstellers an den Remote-Diagnose-Server, und/oder ein Übermitteln der Fehlernachricht von dem Backend-Server des Fahrzeugherstellers an das mobile Endgerät umfassen, falls die Signatur des signierten Remote-Diagnose-Berechtigungsobjekts mit dem öffentlichen, kryptografischen Schlüssel des digitalen Fahrzeugschlüssels auf dem Backend-Server des Fahrzeugherstellers nicht erfolgreich überprüft wurde. Hiermit kann ein Fehlerstatus bezüglich eines Überprüfens der Signatur an den Remote-Diagnose-Server und/oder das mobile Endgerät übermittelt werden.

Gemäß einer weiteren, vorteilhaften Ausgestaltung kann das mobile Endgerät das Remote-Diagnose-Berechtigungsobjekt mit einem privaten, kryptografischen Schlüssel des digitalen Fahrzeugschlüssels signieren, falls ein berechtigter Nutzer des mobilen Endgeräts das Signieren des Remote-Berechtigungsobjekts autorisiert. Hiermit kann eine Remote-Diagnose-Zugriff effizient durch den Nutzer autorisiert werden.

Gemäß einer weiteren, vorteilhaften Ausgestaltung kann das Remote-Diagnose-Berechtigungsobjekt einen Bezeichner eines Diagnoseberechtigten umfassen, und kann der Bezeichner des Diagnoseberechtigten ein eindeutiger Bezeichner einer Fahrzeugwerkstatt sein. Hiermit kann der Remote-Diagnose-Berechtigte für den Nutzer, den Backend-Server des Fahrzeugherstellers, und/oder das Fahrzeug effizient identifiziert werden.

Gemäß einer weiteren, vorteilhaften Ausgestaltung kann der Bezeichner des Diagnoseberechtigten zusätzlich einen kryptografischen Einweghash zu einem nur dem Diagnoseberechtigten bekannten Geheimnis umfassen, und kann der Remote-Diagnose-Befehl auf dem ersten Steuergerät des Fahrzeugs und/oder einem oder mehreren, weiteren Steuergeräten des Fahrzeugs nur ausgeführt werden, falls das nur dem Diagnoseberechtigten bekannte Geheimnis mit dem kryptografischen Einweghash des Remote-Diagnose-Berechtigungsobjekts durch das Fahrzeug, insbesondere durch das erste Steuergerät des Fahrzeugs und/oder ein oder mehrere Steuergeräte des Fahrzeugs, und/oder durch den Backend-Server des Fahrzeugherstellers überprüft wurde. Beispielsweise kann der Diagnoseberechtigte das nur dem Diagnoseberechtigten bekannte Geheimnis zusammen mit einem Remote-Diagnose-Befehl an das erste Steuergerät und/oder ein oder mehrere weitere Steuergeräte des Fahrzeugs übermitteln. Hiermit kann sich der Remote-Diagnose-Berechtigte effizient authentifizieren. Die Sicherheit des Remote-Diagnose-Systems kann effizient weiter erhöht werden.

Gemäß einer weiteren, vorteilhaften Ausgestaltung kann der Remote-Diagnose-Befehl von dem Remote-Diagnose-Server und/oder dem Backend-Server des Fahrzeugherstellers an das erste Steuergerät des Fahrzeugs übermittelt werden, und/oder kann der Remote-Diagnose-Befehl zusammen mit dem Remote-Diagnose-Berechtigungsobjekt von dem Remote-Diagnose-Server und/oder dem Backend-Server des Fahrzeugherstellers an das erste Steuergerät des Fahrzeugs übermittelt werden. Hiermit kann das Übermitteln des Remote-Diagnose-Befehls bzw. der Remote-Diagnose-Befehle effizient verbessert werden.

Gemäß einer weiteren, vorteilhaften Ausgestaltung kann der Bezeichner des Diagnoseberechtigten einen öffentlichen Schlüssel des Diagnoseberechtigten umfassen, und kann der Remote-Diagnose-Befehl auf dem ersten Steuergerät des Fahrzeugs und/oder einem oder mehreren, weiteren Steuergeräten des Fahrzeugs nur ausgeführt werden, falls der Diagnoseberechtigte einen Besitz eines zu dem öffentlichen Schlüssel des Diagnoseberechtigten privaten Schlüssels kryptografisch nachgewiesen hat. Hiermit kann die Sicherheit des Ausführens eines Remote-Diagnose-Befehls effizient verbessert werden.

Gemäß einem weiteren Aspekt zeichnet sich die Erfindung aus durch ein computerlesbares Medium zum Betreiben eines Remote-Diagnose-Systems eines Fahrzeugs, wobei das computerlesbare Medium Instruktionen umfasst, die, wenn ausgeführt auf einem Rechner und/oder einem Steuergerät, das oben beschriebene Verfahren ausführen.

Gemäß einem weiteren Aspekt zeichnet sich die Erfindung aus durch ein System zum Betreiben eines Remote-Diagnose-Systems eines Fahrzeugs, wobei das System dazu ausgebildet ist, das oben beschriebene Verfahren auszuführen.

Gemäß einem weiteren Aspekt zeichnet sich die Erfindung aus durch ein Fahrzeug umfassend das oben beschriebene System zum Betreiben eines Remote-Diagnose-Systems eines Fahrzeugs.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren allein gezeigten Merkmale und Merkmalskombinationen sind nicht nur in der jeweils angegebenen Kombination, sondern auch in anderen Kombinationen oder aber in Alleinstellung verwendbar.

Im Folgenden wird anhand der beigefügten Zeichnungen ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigen schematisch
**Fig. 1** ein beispielhaftes Verfahren zum Betreiben eines Remote-Diagnose-System eines Fahrzeugs und
**Fig. 2** ein beispielhaftes Remote-Diagnose-System eines Fahrzeugs.

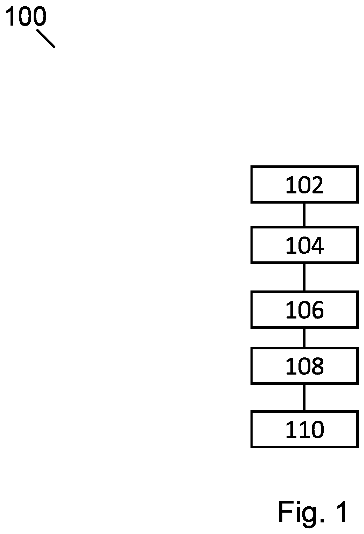

Im Detail zeigt **Fig. 1** ein beispielhaftes Verfahren 100 zum Betreiben eines Remote-Diagnose-System eines Fahrzeugs. Das Verfahren 100 kann ein Remote-Diagnose-Berechtigungsobjekt für einen Remote-Diagnose-Server durch ein mobiles Endgerät mit einem digitalen Fahrzeugschlüssel ermitteln 102. Beispielsweise kann das Remote-Diagnose-Berechtigungsobjekt von einem Remote-Diagnose-Server empfangen werden. Beispielsweise kann das Remote-Diagnose-Berechtigungsobjekt auf dem mobilen Endgerät mit dem digitalen Fahrzeugschlüssel für einen Diagnose-Berechtigten, beispielsweise für den Remote-Diagnose-Server des Diagnose-Berechtigten, erzeugt werden.

Das Verfahren 100 kann das Remote-Diagnose-Berechtigungsobjekt mit einem privaten, kryptografischen Schlüssel des digitalen Fahrzeugschlüssels durch das mobile Endgerät signieren 104. Beispielsweise kann das Verfahren das Remote-Diagnose-Berechtigungsobjekt mit einer digitaler Fahrzeugschlüsselanwendung des mobilen Endgeräts signieren. Weiter kann das Verfahren 100 das signierte Remote-Diagnose-Berechtigungsobjekt von dem mobilen Endgerät an einen Backend-Server eines Fahrzeugherstellers und/oder an ein erstes Steuergerät des Fahrzeugs übermitteln 106.

Das Verfahren 100 kann die Signatur des signierten Remote-Diagnose-Berechtigungsobjekts mit einem öffentlichen, kryptografischen Schlüssel des digitalen Fahrzeugschlüssels auf dem Backend-Server des Fahrzeugherstellers und/oder auf dem ersten Steuergerät des Fahrzeugs überprüfen 108. Falls die Signatur des signierten Remote-Diagnose-Berechtigungsobjekts mit dem öffentlichen, kryptografischen Schlüssel des digitalen Fahrzeugschlüssels auf dem Backen-Server des Fahrzeugherstellers und/oder auf dem ersten Steuergerät des Fahrzeugs erfolgreich überprüft wurde, kann das Verfahren 100 einen Remote-Diagnose-Befehl und/oder eine Remote-Diagnosefunktion auf dem ersten Steuergerät des Fahrzeugs und/oder einem oder mehreren, weiteren Steuergeräten des Fahrzeugs in Abhängigkeit des signierten Remote-Diagnose-Berechtigungsobjekts ausführen 110.

Im Folgenden wird ein beispielhaftes Anwendungsszenario des Verfahrens 100 beschrieben. Ein Nutzer, beispielsweise ein Fahrzeugbesitzer, welcher ein Problem mit dem Fahrzeug feststellt, möchte eine Remote-Diagnose durch eine freie Werkstatt durchführen lassen. Der Nutzer befindet sich entfernt von seinem Fahrzeug, beispielsweise an seinem Arbeitsort. Das Fahrzeug ist an seinem Heimatort abgestellt. Die Remote-Diagnose soll noch am gleichen Tag durch die freie Werkstatt durchgeführt werden. Um eine Remote-Diagnose durch die freie Werkstatt am gleichen Tag durchführen zu lassen, muss der Nutzer des Fahrzeugs der freien Werkstatt einen Remote-Diagnose-Zugriff ermöglichen. Der Ablauf des Verfahrens 100 kann in diesem Anwendungsszenarios wir folgt aussehen: Die freie Werkstatt übermittelt einen Remote-Diagnose-Bezeichner, im Folgenden auch kurz Bezeichner genannt, an das mobile Endgerät des Nutzers. Der Bezeichner kann beispielsweise einen eindeutigen Bezeichner der Werkstatt und/oder einer nur der Werkstatt und dem Nutzer bekannten individuellen Zeichenkette umfassen. Mit einer Fahrzeugapp des mobilen Endgeräts und dem Bezeichner kann der Nutzer auf dem mobilen Endgerät ein Zeitintervall, beispielsweise heute, und ein Zugriffsrecht, beispielsweise Lesen, festlegen. Die Fahrzeugapp kann unter Verwendung des Bezeichners, des Zeitintervalls und des Zugriffsrechts eine Remote-Diagnose-Berechtigungsobjekts erstellen. Nach dem Erstellen des Remote-Diagnose-Berechtigungsobjekts durch die Fahrzeugapp, kann das Remote-Diagnose-Berechtigungsobjekts auf dem mobilen Endgerät mit dem digitalen Fahrzeugschlüssel signiert werden. Das Signieren mit dem digitalen Fahrzeugschlüssel kann ein Authentifizieren des Nutzers des Fahrzeugs durch das mobile Endgerät umfassen. Beispielsweise kann der Nutzer des Fahrzeugs durch ein biometrisches Merkmal des Nutzers, ein Passwort, und/oder eine PIN durch das mobile Endgeräte authentifiziert werden. Das signierte Remote-Diagnose-Berechtigungsobjekts kann von dem mobilen Endgerät an einen Remote-Diagnose-Server der freien Werkstatt übermittelt werden. Mit dem signierten Remote-Diagnose-Berechtigungsobjekt kann sich die freie Werkstatt gegenüber einem Backend-Server eines Fahrzeugherstellers und/oder einem ersten Steuergerät des Fahrzeugs authentifizieren. Der Backend-Server des Fahrzeughersteller und/oder das erste Steuergerät des Fahrzeugs kann die Signatur des Remote-Diagnose-Berechtigungsobjekts mit dem öffentlichen, kryptografischen Schlüssel des digitalen Fahrzeugschlüssels verifizieren. Falls das Verifizieren erfolgreich ist, kann die freie Werkstatt die Remote-Diagnose mit dem Fahrzeug ausführen.

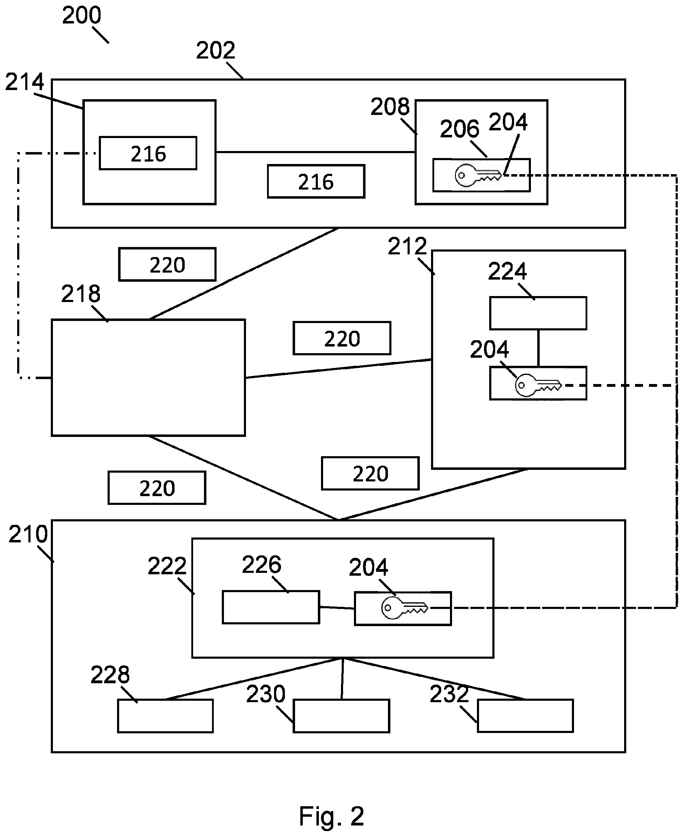

Im Detail zeigt **Fig. 2** ein beispielhaftes Remote-Diagnose-System 200 eines Fahrzeugs. Das Remote-Diagnose-System 200 kann ein mobiles Endgerät 202 mit einem digitalen Fahrzeugschlüssel 204 umfassen. Der digitale Fahrzeugschlüssel 204 kann in einem sicheren Element 206, engl. Secure Element, des mobilen Endgeräts 202 gespeichert sein. Weiter kann das mobile Endgerät 202 einen digitale Fahrzeugschlüsselanwendung 208 umfassen. Der digitale Fahrzeugschlüssel 204 kann mit einem digitalen Fahrzeugschlüssel 204 eines Fahrzeugs 210 und einem digitalen Fahrzeugschlüssel 204 eines Backend-Servers 212 eines Fahrzeugherstellers verknüpft sein. Ein Nutzer des Fahrzeugs 210 kann mit einer Fahrzeugapp 214 des mobilen Endgeräts 202 ein Remote-Diagnose-Berechtigungsobjekt 216 ermitteln. Beispielsweise kann der Nutzer des Fahrzeugs mit der Fahrzeugapp 214 ein Remote-Diagnose-Berechtigungsobjekt 216 von einem Remote-Diagnose-Server 218 empfangen. Dazu kann der Nutzer der Fahrzeugapp 214 den Remote-Diagnose-Server 218 kontaktieren. Beispielsweise kann der Nutzer der Fahrzeugapp 214 eine Nachricht zur Anforderung einer Remote-Diagnose an den Remote-Diagnose-Server 218 übermitteln und der Remote-Diagnose-Server 218 kann in Antwort auf die Nachricht ein Remote-Diagnose-Berechtigungsobjekt an die Fahrzeugapp 214 übermitteln. Beispielsweise kann der Nutzer der Fahrzeugapp 214 einen Remote-Diagnose-Server 218 und/oder einen Remote-Diagnose-Anbieter mittels der Fahrzeugapp 214 ermitteln und die Fahrzeugapp 214 erstellt das Remote-Diagnose-Berechtigungsobjekt 216 für den ermittelten Remote-Diagnose-Server 218 und/oder den ermittelten Remote-Diagnose-Anbieter. Der Nutzer kann das Remote-Diagnose-Berechtigungsobjekt 216 mit der Fahrzeugapp 214 und der digitalen Fahrzeugschlüsselanwendung 208 autorisieren, indem der Nutzer das Remote-Diagnose-Berechtigungsobjekt 216 signiert. Zum Signieren des Remote-Diagnose-Berechtigungsobjekts 216 kann die Fahrzeugapp 214 das Remote-Diagnose-Berechtigungsobjekt 216 an die digitale Fahrzeugschlüsselanwendung 208 übertragen. Die digitale Fahrzeugschlüsselanwendung 208 signiert das Remote-Diagnose-Berechtigungsobjekt 216. Das signierte Remote-Diagnose-Berechtigungsobjekt 220 kann das mobile Endgerät 202, beispielsweise die Fahrzeugapp 214 des mobilen Endgeräts 202 an den Remote-Diagnose-Server 218 übermitteln.

Das Remote-Diagnose-Berechtigungsobjekt 216 und/oder das signierte Remote-Diagnose-Berechtigungsobjekt 220 können Daten umfassen, die einen Remote-Diagnose-Zugriff fahrzeugseitig regeln. Beispielsweise kann das Remote-Diagnose-Berechtigungsobjekt 216 ein oder mehrere Zugriffsrechte, beispielsweise ein Leserecht und/oder ein Steuerungsrecht, ein oder mehrere Zeitintervalle für ein jeweiliges Zugriffsrecht oder alle Zugriffsrechte, beispielsweise ein Tag, eine Stunde, oder dauerhaft, und/oder ein oder mehrere Diagnoseberechtigte, beispielsweise einen Fahrzeughersteller, eine oder mehrere Werkstätten, und/oder ein oder mehrere Remote-Diagnose-Dienstleister umfassen. Der Nutzer kann durch das Signieren des Remote-Diagnose-Berechtigungsobjekts 216 mit dem digitalen Fahrzeugschlüssel 204 einen Remote-Diagnose-Zugriff individuell steuern und/oder freigeben.

Um eine Remote-Diagnose zu starten, kann der Remote-Diagnose-Server 218 das signierte Remote-Diagnose-Berechtigungsobjekts 220 an den Backend-Server 212 des Fahrzeugherstellers oder das erste Steuergerät 222 des Fahrzeugs 210 übermitteln. Der Backend-Server 212 kann eine Softwarekomponente 224 zur Zugriffsüberprüfung umfassen, die die Signatur des signierten Remote-Diagnose-Berechtigungsobjekts überprüfen kann. Das Überprüfen der Signatur des signierten Remote-Diagnose-Berechtigungsobjekts durch den Backend-Server 212 ermöglicht dem Fahrzeughersteller einen Nachweis über erteilte Remote-Diagnose-Zugriffsberechtigung des Nutzers zu führen. Das erste Steuergerät des Fahrzeugs 210 kann eine Softwarekomponente 226 zur Zugriffsüberprüfung umfassen, die die Signatur des signierten Remote-Diagnose-Berechtigungsobjekts überprüfen kann. Nach einer erfolgten Zugriffsüberprüfung durch den Backend-Server 212 und/oder das erste Steuergerät kann ein Remote-Diagnose-Befehl und/oder eine Remote-Diagnose-Funktion auf dem ersten Steuergerät 222 und/oder weiteren Steuergeräten 228, 230, 232 ausgeführt werden.

Vorteilhafterweise kann das Verfahren ein Remote-Diagnose-System eines Fahrzeugs effizienter betreiben. Die Sicherheit des Remote-Diagnose-System kann an die Sicherheit des digitalen Fahrzeugschlüssel gekoppelt werden. In anderen Worten entspricht der Zugriffschutz des Remotediagnosesystem dem Zugriffschutz eines digitalen Fahrzeugschlüssels. Der Zugriff mit einem Remote-Diagnose-Berechtigungsobjekts auf das Fahrzeug kann eindeutig einem digitalen Fahrzeugschlüssel zugeordnet werden. Falls der digitale Fahrzeugschlüssel seine Gültigkeit verliert, kann das Remote-Diagnose-Berechtigungsobjekts ebenfalls seine Gültigkeit verlieren. Weiter ermöglicht das Verfahren berechtigten Dritten, beispielsweise freien Werkstätten, eine Remote-Diagnose mit dem Fahrzeug durchzuführen. Neben dem Fahrzeughersteller können somit eine Vielzahl weiterer berechtigter Dritter eine Remote-Diagnose mit dem Fahrzeug sicher durchführen. Der Nutzer des Fahrzeugs kann selbst festlegen, welche Zugriffrechte eine Remote-Diagnose erhalten soll. Dadurch hat der Nutzer des Fahrzeugs eine vollständige Kontrolle über die Remote-Diagnose seines Fahrzeugs. Weiter ist es für den Nutzer transparent nachvollziehbar, welche Remote-Diagnose-Aktionen durch eine Werkstatt an seinem Fahrzeug vorgenommen werden. Der Nutzer kann bei Problemen mit seinem Fahrzeug schneller eine Remote-Diagnose mit seinem mobilen Endgerät ermöglichen. Mögliche Probleme mit dem Fahrzeug können somit schneller identifiziert und behoben werden.

### Bezugszeichenliste

- 100: Verfahren
- 102: Ermitteln eines Remote-Diagnose-Berechtigungsobjekts
- 104: Signieren des Remote-Diagnose-Berechtigungsobjekts
- 106: Übermitteln des signierten Remote-Diagnose-Berechtigungsobjekts
- 108: Überprüfen einer Signatur des signierten Remote-Diagnose-Berechtigungsobjekts
- 110: Ausführen eines Remote-Diagnose-Befehls
- 200: System
- 202: mobiles Endgerät
- 204: digitaler Fahrzeugschlüssel
- 206: sicheres Element
- 208: digitale Fahrzeugschlüsselanwendung
- 210: Fahrzeug
- 212: Backend-Server
- 214: Fahrzeugapp
- 216: Remote-Diagnose-Berechtigungsobjekt
- 218: Remote-Diagnose-Server
- 220: signiertes Remote-Diagnose-Berechtigungsobjekt
- 222: erstes Steuergerät
- 224: Softwarekomponente zur Zugriffsüberprüfung
- 226: Softwarekomponente zur Zugriffsüberprüfung
- 228: Steuergerät
- 230: Steuergerät
- 232: Steuergerät

## Patentansprüche

1. Verfahren zum Betreiben eines Remote-Diagnose-Systems eines Fahrzeugs, das Verfahren umfassend:
Ermitteln eines Remote-Diagnose-Berechtigungsobjekts für einen Remote-Diagnose-Server durch ein mobiles Endgerät mit einem digitalen Fahrzeugschlüssel;
Signieren des Remote-Diagnose-Berechtigungsobjekts mit einem privaten, kryptografischen Schlüssel des digitalen Fahrzeugschlüssels durch das mobile Endgerät,
Übermitteln des signierten Remote-Diagnose-Berechtigungsobjekts von dem mobilen Endgerät an einen Backend-Server eines Fahrzeugherstellers und/oder an ein erstes Steuergerät des Fahrzeugs;
Überprüfen einer Signatur des signierten Remote-Diagnose-Berechtigungsobjekts mit einem öffentlichen, kryptografischen Schlüssel des digitalen Fahrzeugschlüssels auf dem Backend-Server des Fahrzeugherstellers und/oder auf dem ersten Steuergerät des Fahrzeugs; und
Ausführen eines Remote-Diagnose-Befehls auf dem ersten Steuergerät des Fahrzeugs und/oder einem oder mehreren, weiteren Steuergeräten des Fahrzeugs in Abhängigkeit des signierten Remote-Diagnose-Berechtigungsobjekts, falls die Signatur des signierten Remote-Diagnose-Berechtigungsobjekts mit dem öffentlichen, kryptografischen Schlüssel des digitalen Fahrzeugschlüssels auf dem Backen-Server des Fahrzeugherstellers und/oder auf dem ersten Steuergerät des Fahrzeugs erfolgreich überprüft wurde.

2. Verfahren nach Anspruch 1, wobei das Remote-Diagnose-Berechtigungsobjekt ein Berechtigungsobjekt für ein Lesen von Diagnosedaten des ersten Steuergeräts und/oder eines oder mehrerer, weiterer Steuergeräte des Fahrzeugs als Remote-Diagnose-Befehl umfasst.

3. Verfahren nach einem der vorhergehenden Ansprüche, wobei das Remote-Diagnose-Berechtigungsobjekt ein Berechtigungsobjekt für ein Steuern einer Remote-Diagnose-Funktion des ersten Steuergeräts und/oder eines oder mehrerer, weiterer Steuergeräte des Fahrzeugs als Remote-Diagnose-Befehl umfasst.

4. Verfahren nach einem der vorhergehenden Ansprüche, wobei der private, kryptografische Schlüssel des digitalen Fahrzeugschlüssels in einem sicheren Schlüsselspeicher des mobilen Endgeräts gespeichert ist.

5. Verfahren nach einem der vorhergehenden Ansprüche, wobei das Übermitteln des signierten Remote-Diagnose-Berechtigungsobjekts von dem mobilen Endgerät an den Backend-Server des Fahrzeugherstellers und/oder an das erste Steuergerät des Fahrzeugs umfasst:
Übermitteln des signierten Remote-Diagnose-Berechtigungsobjekts von dem mobilen Endgerät an den Remote-Diagnose-Server; und
Übermitteln des signierten Remote-Diagnose-Berechtigungsobjekts von dem Remote-Diagnose-Server an den Backend-Server des Fahrzeugherstellers oder an das erste Steuergerät des Fahrzeugs.

6. Verfahren nach einem der vorhergehenden Ansprüche, wobei der Remote-Diagnose-Server ein Remote-Diagnose-Server des Fahrzeugherstellers oder ein Remote-Diagnose-Server eines Dritten ist.

7. Verfahren nach einem der vorhergehenden Ansprüche, wobei das Übermitteln des signierten Remote-Diagnose-Berechtigungsobjekts von dem Remote-Diagnose-Server an den Backend-Server des Fahrzeugherstellers umfasst:
Übermitteln des signierten Remote-Diagnose-Berechtigungsobjekts vom dem Remote-Diagnose-Server an den Backend-Server des Fahrzeugherstellers;
Überprüfen der Signatur des signierten Remote-Diagnose-Berechtigungsobjekts mit einem öffentlichen, kryptografischen Schlüssel des digitalen Fahrzeugschlüssels auf dem Backend-Server des Fahrzeugherstellers; und
Falls die Signatur des signierten Remote-Diagnose-Berechtigungsobjekts mit dem öffentlichen, kryptografischen Schlüssel des digitalen Fahrzeugschlüssels auf dem Backend-Server des Fahrzeugherstellers erfolgreich überprüft wurde:
Übermitteln des signierten Remote-Diagnose-Berechtigungsobjekts von dem Backend-Server des Fahrzeugherstellers an das erste Steuergerät des Fahrzeugs.

8. Verfahren nach Anspruch 7, das Verfahren weiterhin umfassend:
Falls die Signatur des signierten Remote-Diagnose-Berechtigungsobjekts mit dem öffentlichen, kryptografischen Schlüssel des digitalen Fahrzeugschlüssels auf dem Backend-Server des Fahrzeugherstellers nicht erfolgreich überprüft wurde:
Übermitteln einer Fehlernachricht von dem Backend-Server des Fahrzeugherstellers an den Remote-Diagnose-Server; und/oder
Übermitteln der Fehlernachricht von dem Backend-Server des Fahrzeugherstellers an das mobile Endgerät.

9. Verfahren nach einem der vorhergehenden Ansprüche, wobei das mobile Endgerät das Remote-Diagnose-Berechtigungsobjekt mit einem privaten, kryptografischen Schlüssel des digitalen Fahrzeugschlüssels signiert, falls ein berechtigter Nutzer des mobilen Endgeräts das Signieren des Remote-Berechtigungsobjekts autorisiert.

10. Verfahren nach einem der vorhergehenden Ansprüche, wobei das Remote-Diagnose-Berechtigungsobjekt einen Bezeichner eines Diagnoseberechtigten; und
wobei der Bezeichner des Diagnoseberechtigten ein eindeutiger Bezeichner einer Fahrzeugwerkstatt ist.

11. Verfahren nach Anspruch 10, wobei der Bezeichner des Diagnoseberechtigten zusätzlich einen kryptografischen Einweghash zu einem nur dem Diagnoseberechtigten bekannten Geheimnis umfasst; und
wobei der Remote-Diagnose-Befehl auf dem ersten Steuergerät des Fahrzeugs und/oder einem oder mehreren, weiteren Steuergeräten des Fahrzeugs nur ausgeführt wird, falls das nur dem Diagnoseberechtigten bekannte Geheimnis mit dem kryptografischen Einweghash des Remote-Diagnose-Berechtigungsobjekts durch das Fahrzeug und/oder durch den Backend-Server des Fahrzeugherstellers überprüft wurde.

12. Verfahren nach einem der vorhergehenden Ansprüche, wobei der Remote-Diagnose-Befehl von dem Remote-Diagnose-Server und/oder dem Backend-Server des Fahrzeugherstellers des an das erste Steuergerät des Fahrzeugs übermittelt wird;
wobei vorzugsweise der Remote-Diagnose-Befehl zusammen mit dem Remote-Diagnose-Berechtigungsobjekt von dem Remote-Diagnose-Server und/oder dem Backend-Server des Fahrzeugherstellers an das erste Steuergerät des Fahrzeugs übermittelt wird.

13. Verfahren nach einem der vorhergehenden Ansprüche, wobei der Bezeichner des Diagnoseberechtigten einen öffentlichen Schlüssel des Diagnoseberechtigten umfasst; und
wobei der Remote-Diagnose-Befehl auf dem ersten Steuergerät des Fahrzeugs und/oder einem oder mehreren, weiteren Steuergeräten des Fahrzeugs nur ausgeführt wird, falls der Diagnoseberechtigte einen Besitz eines zu dem öffentlichen Schlüssel des Diagnoseberechtigten privaten Schlüssels kryptografisch nachgewiesen hat.

14. Computerlesbares Medium zum Betreiben eines Remote-Diagnose-Systems eines Fahrzeugs, wobei das computerlesbare Medium Instruktionen umfasst, die, wenn ausgeführt auf einem Rechner und/oder einem Steuergerät, das Verfahren nach einem der Ansprüche 1 bis 13 ausführen.

15. System zum Betreiben eines Remote-Diagnose-Systems eines Fahrzeugs, wobei das System dazu ausgebildet ist, das Verfahren nach einem der Ansprüche 1 bis 13 auszuführen.

16. Fahrzeug umfassend das System zum Betreiben eines Remote-Diagnose-Systems eines Fahrzeugs nach Anspruch 15.

## Claims

1. Method for operating a remote diagnosis system of a vehicle, said method comprising:
obtaining a remote-diagnosis authorization object for a remote diagnosis server by a mobile terminal using a digital vehicle key;
signing by the mobile terminal the remote-diagnosis authorization object using a private cryptographic key of the digital vehicle key,
transmitting the signed remote-diagnosis authorization object from the mobile terminal to a backend server of a vehicle manufacturer and/or to a first control unit of the vehicle;
verifying on the backend server of the vehicle manufacturer and/or on the first control unit of the vehicle a signature of the signed remote-diagnosis authorization object using a public cryptographic key of the digital vehicle key; and
executing a remote diagnosis command on the first control unit of the vehicle and/or on one or more further control units of the vehicle according to the signed remote-diagnosis authorization object if the signature of the signed remote-diagnosis authorization object has been verified successfully on the backend server of the vehicle manufacturer and/or on the first control unit of the vehicle using the public cryptographic key of the digital vehicle key.

2. Method according to Claim 1, wherein the remote-diagnosis authorization object comprises an authorization object for reading diagnostic data from the first control unit and/or from one or more further control units of the vehicle as a remote diagnosis command.

3. Method according to one of the preceding claims, wherein the remote-diagnosis authorization object comprises an authorization object for controlling a remote diagnosis function of the first control unit and/or of one or more further control units of the vehicle as a remote diagnosis command.

4. Method according to one of the preceding claims, wherein the private cryptographic key of the digital vehicle key is stored in a secure key memory of the mobile terminal.

5. Method according to one of the preceding claims, wherein the transmitting of the signed remote-diagnosis authorization object from the mobile terminal to the backend server of the vehicle manufacturer and/or to the first control unit of the vehicle comprises:
transmitting the signed remote-diagnosis authorization object from the mobile terminal to the remote diagnosis server; and
transmitting the signed remote-diagnosis authorization object from the remote diagnosis server to the backend server of the vehicle manufacturer and/or to the first control unit of the vehicle.

6. Method according to one of the preceding claims, wherein the remote diagnosis server is a remote diagnosis server of the vehicle manufacturer or a remote diagnosis server of a third-party.

7. Method according to one of the preceding claims, wherein the transmitting of the signed remote-diagnosis authorization object from the remote diagnosis server to the backend server of the vehicle manufacturer comprises:
transmitting the signed remote-diagnosis authorization object from the remote diagnosis server to the backend server of the vehicle manufacturer;
verifying on the backend server of the vehicle manufacturer the signature of the signed remote-diagnosis authorization object using a public cryptographic key of the digital vehicle key; and
if the signature of the signed remote-diagnosis authorization object has been verified successfully on the backend server of the vehicle manufacturer using the public cryptographic key of the digital vehicle key:
transmitting the signed remote-diagnosis authorization object from the backend server of the vehicle manufacturer to the first control unit of the vehicle.

8. Method according to Claim 7, said method further comprising:
if the signature of the signed remote-diagnosis authorization object has not been verified successfully on the backend server of the vehicle manufacturer using the public cryptographic key of the digital vehicle key:
transmitting an error message from the backend server of the vehicle manufacturer to the remote diagnosis server; and/or
transmitting the error message from the backend server of the vehicle manufacturer to the mobile terminal.

9. Method according to one of the preceding claims, wherein the mobile terminal signs the remote-diagnosis authorization object using a private cryptographic key of the digital vehicle key if an authorized user of the mobile terminal authorizes the signing of the remote authorization object.

10. Method according to one of the preceding claims, wherein the remote-diagnosis authorization object an identifier of a diagnosis authorized party; and
wherein the identifier of the diagnosis authorized party is a unique identifier of a vehicle repair shop.

11. Method according to Claim 10, wherein the identifier of the diagnosis authorized party additionally comprises a cryptographic one-way hash for a secret known only to the diagnosis authorized party; and
wherein the remote diagnosis command is executed on the first control unit of the vehicle and/or on one or more further control units of the vehicle only if the secret known only to the diagnosis authorized party has been verified using the cryptographic one-way hash of the remote-diagnosis authorization object by the vehicle and/or by the backend server of the vehicle manufacturer.

12. Method according to one of the preceding claims, wherein the remote diagnosis command is transmitted from the remote diagnosis server and/or the backend server of the vehicle manufacturer to the first control unit of the vehicle;
wherein preferably the remote diagnosis command is transmitted together with the remote-diagnosis authorization object from the remote diagnosis server and/or the backend server of the vehicle manufacturer to the first control unit of the vehicle.

13. Method according to one of the preceding claims, wherein the identifier of the diagnosis authorized party comprises a public key of the diagnosis authorized party; and
wherein the remote diagnosis command is executed on the first control unit of the vehicle and/or on one or more further control units of the vehicle only
if the diagnosis authorized party has cryptographically proved ownership of a private key belonging to the public key of the diagnosis authorized party.

14. Computer-readable medium for operating a remote diagnosis system of a vehicle, wherein the computer-readable medium comprises instructions which, when executed on a computer and/or a control unit, perform the method according to one of Claims 1 to 13.

15. System for operating a remote diagnosis system of a vehicle, wherein the system is designed to perform the method according to one of Claims 1 to 13.
Vehicle comprising the system for operating a remote diagnostic system of a vehicle according to Claim 15.

16. A vehicle comprising the system for operating a remote diagnostic system of a vehicle according to claim 15.

## Revendications

1. Procédé pour faire fonctionner un système de diagnostic à distance d'un véhicule, le procédé comprenant :
la détermination d'un objet d'autorisation de diagnostic à distance pour un serveur de diagnostic à distance par un terminal mobile doté d'une clé numérique de véhicule ;
la signature de l'objet d'autorisation de diagnostic à distance avec une clé cryptographique privée de la clé numérique de véhicule par le terminal mobile,
la transmission de l'objet d'autorisation de diagnostic à distance signé depuis le terminal mobile à un serveur backend d'un constructeur de véhicules et/ou à une première unité de commande du véhicule ;
la vérification d'une signature de l'objet d'autorisation de diagnostic à distance signé avec une clé cryptographique publique de la clé numérique de véhicule sur le serveur backend du constructeur de véhicules et/ou sur la première unité de commande du véhicule ; et
l'exécution d'une commande de diagnostic à distance sur la première unité de commande du véhicule et/ou sur une ou plusieurs autres unités de commande du véhicule en fonction de l'objet d'autorisation de diagnostic à distance signé, si la signature de l'objet d'autorisation de diagnostic à distance signé a été vérifiée avec succès avec la clé cryptographique publique de la clé numérique de véhicule sur le serveur backend du constructeur de véhicules et/ou sur la première unité de commande du véhicule.

2. Procédé selon la revendication 1, dans lequel l'objet d'autorisation de diagnostic à distance comprend un objet d'autorisation pour une lecture de données de diagnostic de la première unité de commande et/ou d'une ou plusieurs autres unités de commande du véhicule en tant que commande de diagnostic à distance.

3. Procédé selon l'une des revendications précédentes, dans lequel l'objet d'autorisation de diagnostic à distance comprend un objet d'autorisation pour une commande d'une fonction de diagnostic à distance de la première unité de commande et/ou d'une ou plusieurs autres unités de commande du véhicule en tant que commande de diagnostic à distance.

4. Procédé selon l'une des revendications précédentes, dans lequel la clé cryptographique privée de la clé numérique de véhicule est stockée dans une mémoire de clés sécurisée du terminal mobile.

5. Procédé selon l'une des revendications précédentes, dans lequel la transmission de l'objet d'autorisation de diagnostic à distance signé depuis le terminal mobile au serveur backend du constructeur de véhicules et/ou à la première unité de commande du véhicule comprend :
la transmission de l'objet d'autorisation de diagnostic à distance signé depuis le terminal mobile au serveur de diagnostic à distance ; et
la transmission de l'objet d'autorisation de diagnostic à distance signé depuis le serveur de diagnostic à distance au serveur backend du constructeur de véhicules ou à la première unité de commande du véhicule.

6. Procédé selon l'une des revendications précédentes, dans lequel le serveur de diagnostic à distance est un serveur de diagnostic à distance du constructeur de véhicules ou un serveur de diagnostic à distance d'un tiers.

7. Procédé selon l'une des revendications précédentes, dans lequel la transmission de l'objet d'autorisation de diagnostic à distance signé depuis le serveur de diagnostic à distance au serveur backend du constructeur de véhicules comprend :
la transmission de l'objet d'autorisation de diagnostic à distance signé depuis le serveur de diagnostic à distance au serveur backend du constructeur de véhicules ;
la vérification de la signature de l'objet d'autorisation de diagnostic à distance signé avec une clé cryptographique publique de la clé numérique de véhicule sur le serveur backend du constructeur de véhicules ; et
si la signature de l'objet d'autorisation de diagnostic à distance signé a été vérifiée avec succès avec la clé cryptographique publique de la clé numérique de véhicule sur le serveur backend du constructeur de véhicules :
la transmission de l'objet d'autorisation de diagnostic à distance signé depuis le serveur backend du constructeur de véhicules à la première unité de commande du véhicule.

8. Procédé selon la revendication 7, le procédé comprenant en outre :
si la signature de l'objet d'autorisation de diagnostic à distance signé n'a pas été vérifiée avec succès avec la clé cryptographique publique de la clé numérique de véhicule sur le serveur backend du constructeur de véhicules :
la transmission d'un message d'erreur depuis le serveur backend du constructeur de véhicules au serveur de diagnostic à distance ; et/ou
la transmission du message d'erreur depuis le serveur backend du constructeur de véhicules au terminal mobile.

9. Procédé selon l'une des revendications précédentes, dans lequel le terminal mobile signe l'objet d'autorisation de diagnostic à distance avec une clé cryptographique privée de la clé numérique de véhicule si un utilisateur habilité du terminal mobile autorise la signature de l'objet d'autorisation à distance.

10. Procédé selon l'une des revendications précédentes, dans lequel l'objet d'autorisation de diagnostic à distance comprend un identifiant d'une personne habilitée à effectuer un diagnostic ; et
dans lequel l'identifiant de la personne habilitée à effectuer un diagnostic est un identifiant unique d'un atelier de réparation de véhicules.

11. Procédé selon la revendication 10, dans lequel l'identifiant de la personne habilitée à effectuer un diagnostic comprend en outre un hachage cryptographique à sens unique d'un secret connu uniquement de la personne habilitée à effectuer un diagnostic ; et
dans lequel la commande de diagnostic à distance n'est exécutée sur la première unité de commande du véhicule et/ou sur une ou plusieurs autres unités de commande du véhicule que si le secret connu uniquement de la personne habilitée à effectuer un diagnostic a été vérifié avec le hachage cryptographique à sens unique de l'objet d'autorisation de diagnostic à distance par le véhicule et/ou par le serveur backend du constructeur de véhicules.

12. Procédé selon l'une des revendications précédentes, dans lequel la commande de diagnostic à distance est transmise depuis le serveur de diagnostic à distance et/ou le serveur backend du constructeur de véhicules à la première unité de commande du véhicule ;
dans lequel, de préférence, la commande de diagnostic à distance est transmise conjointement avec l'objet d'autorisation de diagnostic à distance depuis le serveur de diagnostic à distance et/ou le serveur backend du constructeur de véhicules à la première unité de commande du véhicule.

13. Procédé selon l'une des revendications précédentes, dans lequel l'identifiant de la personne habilitée à effectuer un diagnostic comprend une clé publique de la personne habilitée à effectuer un diagnostic ; et
dans lequel la commande de diagnostic à distance n'est exécutée sur la première unité de commande du véhicule et/ou sur une ou plusieurs autres unités de commande du véhicule que si
la personne habilitée à effectuer un diagnostic a prouvé cryptographiquement qu'elle possède une clé privée correspondant à sa clé publique.

14. Support lisible par ordinateur pour faire fonctionner un système de diagnostic à distance d'un véhicule, dans lequel le support lisible par ordinateur comprend des instructions qui, lorsqu'elles sont exécutées sur un ordinateur et/ou une unité de commande, exécutent le procédé selon l'une des revendications 1 à 13.

15. Système pour faire fonctionner un système de diagnostic à distance d'un véhicule, dans lequel le système est conçu pour exécuter le procédé selon l'une des revendications 1 à 13.

16. Véhicule comprenant le système pour faire fonctionner un système de diagnostic à distance d'un véhicule selon la revendication 15.
